Europäisches Patentamt

European Patent Office

Office européen des brevets

(19)

(11) Veröffentlichungsnummer: **0 264 585 B1**

(12) # EUROPÄISCHE PATENTSCHRIFT

(45) Veröffentlichungstag der Patentschrift: **29.05.91**

(51) Int. Cl.⁵: **B41K 1/10**

(21) Anmeldenummer: **87112471.5**

(22) Anmeldetag: **27.08.87**

(54) **Druckwerk.**

(30) Priorität: **21.10.86 DE 3635733**

(43) Veröffentlichungstag der Anmeldung:
**27.04.88 Patentblatt 88/17**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI NL SE**

(56) Entgegenhaltungen:
**EP-A- 0 154 212**
**DE-C- 2 265 611**
**GB-A- 2 130 969**

(73) Patentinhaber: **ESSELTE METO INTERNATIO-
NAL PRODUKTIONS GMBH
Brentanostrasse
W-6932 Hirschhorn/Neckar(DE)**

(72) Erfinder: **Volk, Heinrich
Neckartalstrasse 29
W-6124 Beerfelden-Gammelsbach(DE)**
Erfinder: **Koch, Ulf
Am Linkbrunnen 23
W-6930 Eberbach(DE)**

(74) Vertreter: **Schwepfinger, Karl-Heinz, Dipl.-Ing.
et al
Prinz, Leiser, Bunke & Partner Manzingerweg
7
W-8000 München 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Druckwerk mit mehreren Typenträgern, die an ihrer Außenumfangsfläche in einem Bereich Drucktypen und in einem anderen Bereich Ablesetypen tragen, wobei die Drucktypen durch Verdrehen der Typenträger in eine gewünschte Druckposition gebracht werden können, einer Einstellanordnung, die einen axial fest mit ihr verbundenen Betätigungsknopf aufweist und durch axiales Verschieben mit jedem einzelnen der Typenträger zu dessen Verdrehen in eine Antriebsverbindung bringbar ist und Anschlagmitteln zur Begrenzung des Verdrehwegs der Typenträger, wobei die Einstellanordnung mit einer Vorrichtung zur Begrenzung des mittels des Betätigungsknopfs übertragbaren Drehmoments versehen ist.

Ein solches Druckwerk ist aus der DE-PS 34 06 762 bekannt. Bei diesem bekannten Druckwerk verhindern die Anschlagmittel, daß die Typenträger durch Drehen des Einstellknopfs und der mit ihm verbundenen Einstellwelle so weit verdreht werden, daß die Ablesetypen in die Druckposition gelangen und in dieser Position mit der Druckfarbe in Kontakt kommen. Die gute Erkennbarkeit der Ablesetypen würde dadurch stark beeinträchtigt. In der Praxis hat sich gezeigt, daß solche Anschlagmittel die Bedienungsperson häufig nicht davon abhalten, den Versuch zu unternehmen, die Typenträger durch Anwendung einer großen Kraft über die durch die Anschlagmittel vorgegebenen Endpositionen hinwegzubewegen. Dabei kann es dann unter Umständen zu einer Beschädigung des Druckwerks kommen. Um dies zu verhindern, ist bei dem bekannten Druckwerk zwischen einer Einstellwelle und dem auf dieser sitzenden Betätigungsknopf als Drehmomentbegrenzungsvorrichtung eine Rutschkupplung vorgesehen, die durchrutscht und ein weiteres Verdrehen der Einstellwelle und des damit jeweils gekoppelten Typenträgers verhindert, sobald das vom Betätigungsknopf auf die Einstellwelle übertragene Drehmoment größer als das zum Verdrehen der Typenträger notwendige Drehmoment wird. Dies bedeutet, daß dann, wenn die Anschlagmittel wirksam werden, der Betätigungsknopf auf der Einstellwelle durchrutscht, so daß die Aufwendung einer größeren Kraft durch die Bedienungsperson keine schädlichen Auswirkungen auf das Druckwerk haben kann.

Bei dem bekannten Druckwerk ist das Grenzdrehmoment, bei dem das Durchrutschen der Rutschkupplung beginnt, durch die Zusammenwirkung des Materials des Betätigungsknopfs und der Passung, mit der der Betätigungsknopf auf der Einstellwelle sitzt, vorgegeben. Es hat sich gezeigt, daß die genaue Einhaltung des Grenzdrehmoments zu Schwierigkeiten führt, da es eine große Konstanz der Materialeigenschaften des Betätigungsknopfs voraussetzt. Auch Faktoren, auf die der Druckwerkhersteller keinen Einfluß hat, können das Grenzdrehmoment beeinflussen; beispielsweise wird das Grenzdrehmoment drastisch herabgesetzt, wenn Öl auf die Einstellwelle gelangt. In diesem Fall kann es beispielsweise so weit herabgesetzt werden, daß ein normales Verstellen der Typenträger nicht mehr möglich ist, da der Betätigungsknopf bereits bei Aufwendung dieses Verstelldrehmoments auf der Einstellwelle durchrutscht.

Der Erfindung liegt die Aufgabe zugrunde, ein Druckwerk zu schaffen, bei dem die zur Übertragung des Drehmoments zum Verstellen der Typenträger erforderlichen Bauteile mit größeren Toleranzen sowohl hinsichtlich der Maße als auch der Materialeigenschaften unter Einhaltung eines von Umweltbedingungen kaum beeinflußbaren Grenzdrehmoments hergestellt werden.

Diese Aufgabe wird erfindungsgemäß dadurch gelöst, daß die Vorrichtung zur Begrenzung des Drehmoments federnde Rastelemente aufweist, die den Betätigungsknopf mit einem durch ihre Federhärte bestimmten Rastmoment, das größer als das zum Verdrehen der Typenträger erforderliche Drehmoment ist, gegen ein Verdrehen relativ zu dem mit der Einstellanordnung in Antriebsverbindung stehenden Typenträger festhalten.

Beim erfindungsgemäßen Druckwerk bestimmen die Rastelemente durch ihre bei der Herstellung festlegbare Federhärte das übertragbare Grenzdrehmoment. Auf die Auswahl von bestimmten Materialien mit genau einzuhaltenden Eigenschaften kommt es dabei nicht an. Die von den Rastelementen ausgeübte Rastkraft wird von Umwelteinflüssen, beispielsweise einer Verschmutzung, nicht merklich beeinflußt, so daß das übertragbare Grenzdrehmoment auch über längere Zeiträume konstant bleibt.

Vorteilhafte Weiterbildungen der Erfindung sind in den Unteransprüchen gekennzeichnet.

Bei der im Anspruch 11 gekennzeichneten Lösung liegen die das Grenzdrehmoment bestimmenden Rastelemente in einem Bereich im Inneren des Druckwerks angeordnet, in dem sie besonders gut gegen Umwelteinflüsse geschützt sind, so daß eine sehr gute Langzeitkonstanz des Grenzdrehmoments erzielt wird.

Die Erfindung wird nun anhand der Zeichnung beispielshalber erläutert. Es zeigen:

Fig. 1 eine Explosionsdarstellung eines Druckwerks nach der Erfindung,

Fig. 2 eine Innenansicht der rechten Gehäusehälfte des Druckwerks von Fig. 1,

Fig. 3 eine Ansicht der Einstellwelle zur Verstellung der Typenträger,

Fig. 4 einen Schnitt längs der Linie A-A von Fig. 3,

Fig. 5     eine Ansicht des Betätigungsknopfs in der Darstellung von Fig. 1 von der rechten Seite her,

Fig. 6     einen Schnitt längs der Linie B-B von Fig. 5,

Fig. 7     einen Schnitt längs der Linie C-C von Fig. 5,

Fig. 8     einen Axialschnitt durch einen auf das Ende einer Einstellwelle geschobenen Betätigungsknopf längs der Linie D-D in Fig. 9 in einer abgeänderten Ausführung,

Fig. 9     eine Ansicht des Betätigungsknopfs und des Einstellwellenendes in der Ausführung von Fig. 8 von rechts und

Fig. 10    einen Axialschnitt durch den Betätigungsknopf, die Einstellwelle und einen damit verbundenen Mitnehmerträger in einer weiteren Ausführungsform der Erfindung.

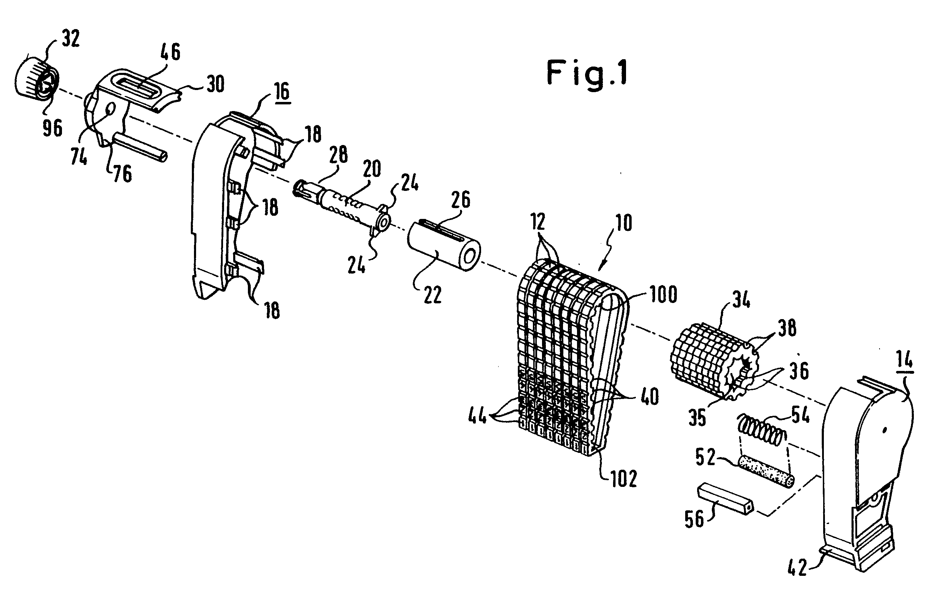

Das in Fig. 1 dargestellte Druckwerk 10 ist ein Stempeldruckwerk, bei dem als Typenträger Typenbänder 12 verwendet werden. Das Druckwerk enthält zwei Gehäusehälften 14 und 16, die über Schnapphaken 18 miteinander verbunden werden können. In der Gehäusehälfte 16 ist eine Einstellwelle 20 drehbar gelagert, über die eine geschlitzte Hülse 22 geschoben ist. Am Ende der Einstellwelle 20 angebrachte Mitnehmer 24 greifen durch Schlitze 26 in der Hülse 22 über deren Außenumfang hinaus. Auf dem Endbereich 28 der Einstellwelle 20 sitzen ein Fensterträger 30 und ein Betätigungsknopf 32, mit dessen Hilfe die Einstellwelle 20 gedreht und axial verschoben werden kann. Bei der Verschiebung der Einstellwelle 20 wird auch der Fensterträger 30 axial verschoben, und die Mitnehmer 24 gleiten axial längs der Schlitze 26 in der Hülse 22. Auf der Hülse 22 sitzen Einstellräder 34, die an ihrer eine zentrale Öffnung 35 umgebenden Innenumfangsfläche Nuten 36 aufweisen, in die die Mitnehmer 24 der Einstellwelle 20 eingreifen. Durch axiales Verschieben der Einstellwelle 20 können die Mitnehmer 24 jeweils mit Nuten 36 eines Einstellrads 34 in Eingriff gebracht werden. Auf diese Weise kann durch Drehen des Betätigungsknopfs 32 nacheinander jedes der Einstellräder 34 gedreht werden. Die Einstellräder 34 sind an ihrer Außenumfangsfläche ebenfalls mit Nuten 38 versehen, in die an der Innenumfangsfläche der Typenbänder 12 angebrachte Vorsprünge 40 eingreifen. Auf diese Weise können die Typenbänder 12 über den Eingriff zwischen den Mitnehmern 24 und den Nuten 36 sowie den Eingriff zwischen den Nuten 38 und den Vorsprüngen 40 bewegt werden.

Die Typenbänder 12 sind im Druckwerk um die Einstellräder 34 herumgelegt, und sie umgreifen außerdem einen an der unteren Stirnfläche der Gehäusehälfte 14 befindlichen, als Umlenkkante für die Typenbänder 12 dienenden Drucksteg 42. Die Drucktype, die sich bei der jeweiligen Einstellung der Typenbänder 12 gerade unter dem Drucksteg 42 befindet, erzeugt jeweils den gewünschten Abdruck. In diesem Zusammenhang sei bemerkt, daß in Fig. 1 an den Typenbändern 12 nur einige der Ablesetypen dargestellt sind; die Drucktypen befinden sich auf der in Fig. 1 nicht erkennbaren Rückseite des von den Typenträgern 12 gebildeten Typenträgersatzes. Die erkennbaren Ablesetypen 44 und die jeweils zugeordneten Drucktypen sind auf den Typenbändern 12 so angebracht, daß immer dann, wenn sich eine Drucktype unterhalb des Druckstegs 42 in der Druckposition befindet, die entsprechende Ablesetype durch ein Fenster 46 im Fensterträger 30 sichtbar ist. Auf diese Weise ist durch das Fenster 46 hindurch stets erkennbar, welche Drucktypen sich gerade in der Druckposition unter dem Drucksteg 42 befinden.

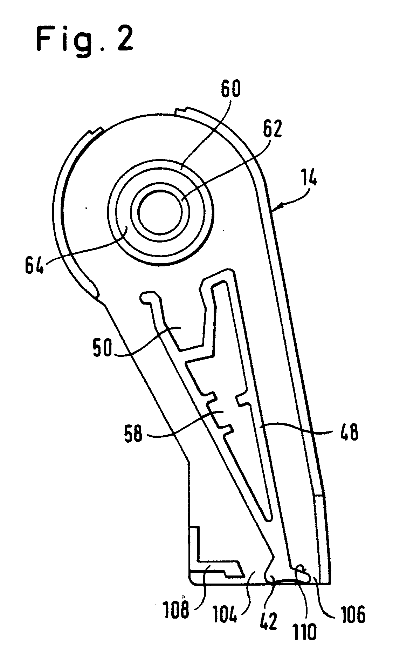

Nach Fig. 2 ist der Drucksteg 42 einstückig am unteren Ende eines mit der Gehäusehälfte 14 verbundenen Trägerelements 48 angebracht. An seinem oberen Ende weist das Trägerelement 48 eine Ausnehmung 50 auf, in der sich im zusammengebauten Zustand des Druckwerks ein Gummistreifen 52 und darüber eine Schraubenfeder 54 befinden. Der Gummistreifen 52 und die Schraubenfeder 54 haben zusammen eine solche Höhe, daß die Schraubenfeder 54 aus der Ausnehmung 50 nach oben herausragt und mit den darüber angeordneten Einstellrädern 34 in Kontakt kommt. Die Schraubenfeder 54 übt dabei eine begrenzte Haltekraft auf die Einstellräder aus, die deren Verdrehung entgegenwirkt. Wenn ein Einstellrad 34 durch Drehen der Einstellwelle 20 mittels des Betätigungsknopfs 32 gedreht wird, spürt die Bedienungsperson eine Rastkraft, die jeweils überwunden werden muß, um ein Typenband 12 schrittweise so zu verstellen, daß eine Drucktype nach der anderen unter dem Drucksteg 42 zu liegen kommt.

Mittels eines Vierkantstücks 56, das in eine Ausnehmung 58 im Trägerelement 48 eingesetzt ist und dessen Breite der lichten Innenbreite der beiden Gehäusehälften 14, 16 entspricht, kann das Stempeldruckwerk beispielsweise mit einem Druckwerkträger eines Handetikettiergeräts verschraubt werden. Die entsprechenden, in Fig. 2 nicht dargestellten Schrauben können dabei durch Löcher in den Gehäusehälften 14, 16 gesteckt und in Gewindebohrungen in den Enden des Vierkantstücks 56 geschraubt werden.

Zur Lagerung der Hülse 22 in der Gehäusehälfte 14 sind zwei Ringbünde 60, 62 vorgesehen, deren radialer Abstand eine Ausnehmung 64 bildet, deren radiale Abmessung gleich der Wandstärke der Hülse 22 ist, so daß diese Hülse in die Ausnehmung geschoben und von den Ringbünden 60 und 62 gehalten werden kann. Der innere Ringbund 62 greift dabei innen in die Hülse 22 ein, während der äußere Ringbund 60 die Hülse 22 außen umfaßt. Die beiden Ringbünde haben nur eine geringe axiale Erstreckung, so daß sie jeweils nur das in Fig. 1 am weitesten rechts liegende Ende der Hülse 22 festhalten.

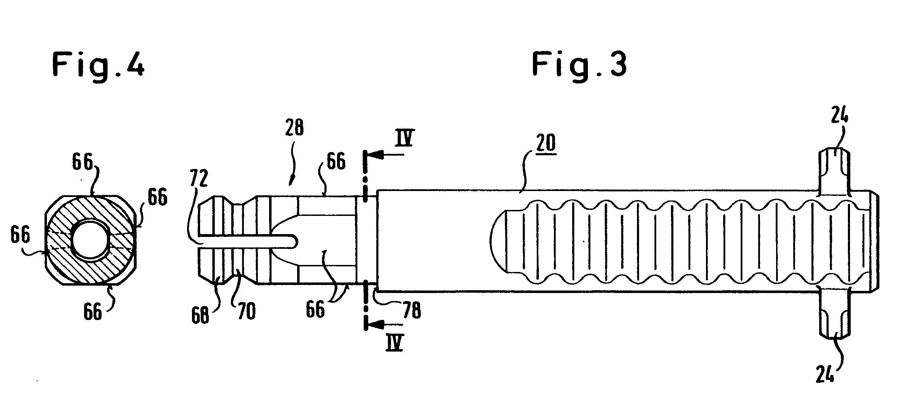

In Fig. 3 ist die Einstellwelle des Druckwerks von Fig. 1 in einer vergrößerten Ansicht dargestellt. Der für die Aufnahme des Betätigungsknopfs 32 bestimmte Endbereich 28 der Einstellwelle 20 hat einen teilweise quadratischen Querschnitt mit abgerundeten Ecken, so daß vier Rastflächen 66 entstehen. Unmittelbar am Ende weist die Einstellwelle 20 einen Wulst 68 und eine sich daran anschließende Umfangsnut 70 auf. Ein im Endbereich 28 der Einstellwelle 20 angebrachter diametraler Schlitz 72 erzeugt eine gewisse Elastizität dieses Endbereichs und eine Nachgiebigkeit des Wulsts 68. Der Wulst 68 und die Umfangsnut 70 haben den Zweck, den auf den Endbereich 28 geschobenen Betätigungsknopf 32 sicher festzuhalten, ohne daß dieser mit Hilfe zusätzlicher Mittel befestigt werden muß. Wie das Festhalten erfolgt, wird anschließend bei der Schilderung der Ausgestaltung des Betätigungsknopfs noch erkennbar werden.

Im zusammengebauten Zustand ragt der Endbereich 28 der Einstellwelle 20 durch eine Öffnung 74 in einer Seitenplatte 76 des Fensterträgers 30, wobei die Stufe 78 an der Einstellwelle 20 als Anschlag wirkt, die ein weiteres Hineinschieben der Einstellwelle 20 in die Öffnung 74 verhindert. Der Abschnitt des Endbereichs 28, der den quadratischen Querschnitt hat, ragt aus der Öffnung 74 in der Seitenplatte 76 in der Ansicht von Fig. 1 nach links heraus, so daß der Betätigungsknopf 32 auf den Endbereich aufgeschoben werden kann.

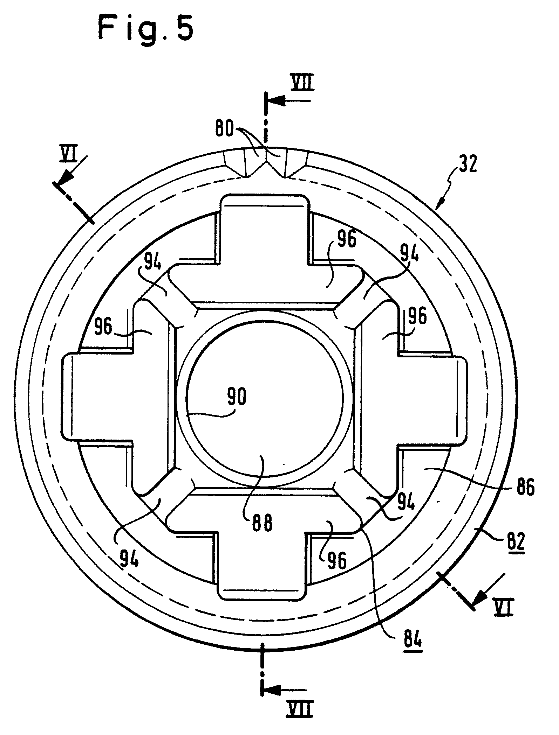

Nach den Fig. 5, 6 und 7 ist der Betätigungsknopf 32 an seiner Außenumfangsfläche leicht konisch ausgebildet, damit sein Anfassen und Betätigen erleichtert werden. Zur Erhöhung der Griffigkeit ist die Außenumfangsfläche geriffelt, was in Fig. 5 zur Vereinfachung der Darstellung nur mit Hilfe von zwei Riffelnuten 80 angedeutet ist. Der Betätigungsknopf 32 weist eine Außenhülse 82 und eine Innenhülse 84 auf, die mit der Außenhülse 82 an der Stirnfläche des Betätigungsknopfs 32 verbunden ist. Die Innenhülse 84 umgibt einen Innenhohlraum 88, der im Bereich der Stirnfläche 84 eine Verengung in Form eines Ringwulsts 90 hat. Wenn der Betätigungsknopf 32 auf die Einstellwelle aufgeschoben wird, drückt der Ringwulst 90 unter Ausnutzung der wegen des Schlitzes 72 gegebenen Nachgiebigkeit den Wulst 68 zusammen, bis der Ringwulst 90 in die Umfangsnut 70 gleitet. Der Wulst 68 kommt dann in der Erweiterung 92 im Betätigungsknopf 32 zu liegen, so daß der Betägungsknopf 32 sicher auf der Einstellwelle 20 festgehalten wird.

Die Innenhülse 84 des Betätigungsknopfs 32 hat einen im wesentlichen quadratischen Querschnitt, wie in Fig. 5 zu erkennen ist. An den Ecken der quadratischen Form sind in Axialrichtung Schlitze 94 angebracht, so daß vier axial verlaufende Rastfinger 96 entstehen, die sich beim Aufschieben des Betätigungsknopfs 32 auf den Endbereich 28 der Einstellwelle 20 an die Rastflächen 66 anlegen. Wenn der Verdrehung der Einstellwelle 20 kein Widerstandsmoment entgegenwirkt, kann die Einstellwelle 20 mittels des aufgeschobenen Betätigungsknopfs 32 aufgrund der Zusammenwirkung der Rastfinger 96 mit den Rastflächen 66 gedreht werden. Die Rastfinger 96 sind aufgrund des Vorhandenseins der Schlitze 94 in radialer Richtung auslenkbar und wirken wie Federn, die eine bestimmte Federhärte haben. Diese Federhärte ist durch das Material und durch die konstruktive Ausgestaltung der Rastfinger festgelegt.

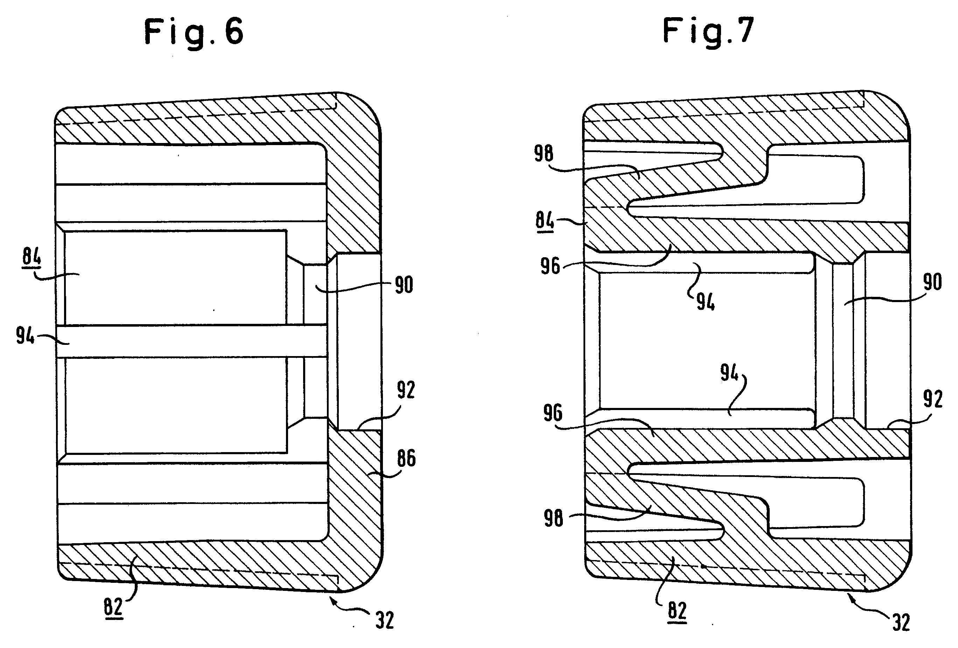

Fig. 7 zeigt, daß die freien Enden der Rastfinger 96 über Verbindungsstege 98 mit der Außenhülse verbunden sind, wobei die Stelle, an der die Verbindungsstege mit der Außenhülse 82 verbunden sind, etwa in der Mitte der Längserstreckung der Außenhülse 82 liegt. Diese Verbindungsstege erhöhen die Federhärte der Rastfinger, üben sonst aber keinen Einfluß auf die sich wie einseitig eingespannte Blattfedern verhaltenden Rastfinger 96 aus.

Wie erwähnt, nimmt der auf die Einstellwelle 20 aufgeschobene Betätigungsknopf 32 diese bei einem Verdrehen mit, solange der Verdrehung der Einstellwelle 20 kein Widerstandsmoment entgegenwirkt. Das Druckwerk von Fig. 1 ist jedoch so ausgestaltet, daß die Typenbänder 12 beim Drehen der Einstellwelle 20 nur einen vorgegebenen Verstellweg ausführen können, wobei jedem weiteren Verdrehen ein sehr großes Widerstandsmoment entgegengesetzt wird. Dieses große Widerstandsmoment wird dadurch erzeugt, daß an der Innenumfangsfläche der Typenbänder 12 Vorsprünge 100 und 102 angebracht sind, die so dimensioniert sind, daß sie nicht durch einen Spalt 106 zwischen dem Drucksteg 42 und der Wand des Gehäuses 14 oder einen Spalt zwischen dem Drucksteg 42 und einem mit dem Gehäuse 14 verbundenen Anschlagsteg 108 hindurchpassen. Die beiden Vorsprünge 100 und 102 begrenzen damit den Verstellweg der Typenbänder in beiden Verstellrichtungen in der Weise, daß zwar alle Drucktypen unter den Drucksteg 42 gelangen können, nicht aber die den Drucktypen zugeordneten Ablesetypen 44. Wenn also ein Typenband so weit verstellt worden ist, daß der Vorsprung 100 in Anlage an die Oberkante 110 des Druckstegs 142 gekommen ist, steigt das dem weiteren Verdrehen entgegenwirkende Widerstandsmoment sehr stark an. Die Federhärte der Rastfinger 96 ist so dimensioniert, daß in dieser Situation eine Auslenkung der Federfinger 96 radial nach außen stattfindet, so daß die von den Rastfingern 96 ausgeübte Rastkraft überwunden wird und der Betätigungsknopf 32 auf dem Endbereich 28 der Einstellwelle 20 durchrutscht. Auf diese Weise wird verhindert, daß durch ein gewaltsames Weiterdrehen des Betätigungsknopfs 32 irgendwelche Beschädigungen des Druckwerks hervorgerufen werden.

In der anderen Drehrichtung führt der Vorsprung 102 zum starken Ansteigen des Widerstandsmoments.

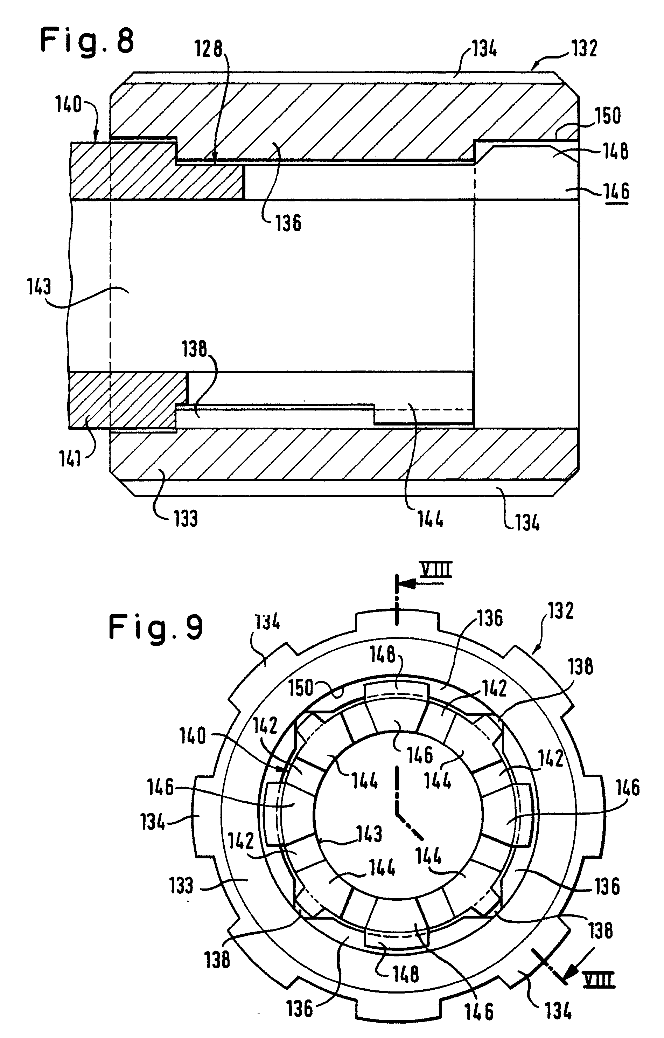

In den Fig. 8 und 9 ist eine weitere Ausführungsform des Betätigungsknopfs und des mit ihm zusammenwirkenden Einstellwellen-Endbereichs dargestellt. Der Betätigungsknopf 132 hat die Form eines Hohlzylinders, dessen Wand 133 auf ihrer Außenumfangsfläche zur Verbesserung der Griffigkeit mit Vorsprüngen 134 versehen ist. In einem mittleren Bereich sind an der Innenumfangsfläche der zylindrischen Wand 133 des Betätigungsknopfs 132 Vorsprünge 136 und dazwischen jeweils Rastnuten 138 angebracht.

Der den Bedienungsknopf 32 aufnehmende Endbereich 128 der Einstellwelle 140 weist in seiner eine Axialdurchführung 143 umgebenden zylindrischen Wand 141 acht Schlitze 142 auf, so daß insgesamt acht sich axial erstreckende Rastelemente entstehen. Vier dieser Rastelemente bilden Rastfinger 144, während vier weitere Rastelemente, die jeweils zwischen zwei benachbarten Rastfingern 144 liegen, Sperrhaken 146 bilden. Wie in Fig. 8 zu erkennen ist, haben die Rastfinger 144 und die Sperrhaken 146 jeweils eine unterschiedliche axiale Erstreckung, die Sperrhaken reichen nämlich bis zur in Fig. 8 rechts liegenden Stirnfläche des Betätigungsknopfs 132, während die Rastfinger 144 nur so weit nach rechts ragen, wie auch die Vorsprünge 136 nach rechts verlaufen.

Die Rastfinger 144 haben die gleiche Wirkung wie die Rastfinger 96 in der zuvor beschriebenen Ausführungsform. Sie verhindern ein freies Drehen des Betätigungsknopfs 132 auf dem Endbereich 128 der Einstellwelle 140. Aufgrund ihrer Federhärte setzen diese Rastfinger 144 dem Verdrehen des Betätigungsknopfs 132 relativ zur Einstellwelle 140 eine Rastkraft entgegen, die erst überwunden werden muß, damit eine relative Verdrehung ermöglicht wird. Die Federhärte der Rastfinger 144 ist so dimensioniert, daß die relative Verdrehung des Betätigungsknopfs 132 bezüglich der Einstellwelle 140 erst eintritt, wenn das von den Typenbändern 12 hervorgerufene Widerstandsmoment größer als das für ein normales Verstellen der Typenbänder aufzuwendende Drehmoment wird. Wie im zuvor beschriebenen Ausführungsbeispiel ist dies dann der Fall, wenn einer der Vorsprünge 100 oder 102 gegen die Oberkante des Druckstegs 42 läuft. Erst dann rutscht der Betätigungsknopf 132 auf dem Endbereich 128 der Einstellwelle 140 durch, wobei die Rastfinger 144 durch die Vorsprünge 136 radial nach innen ausgelenkt werden. Auf diese Weise wird bei Aufwendung eines über dem Grenzdrehmoment liegenden Drehmoments eine Beschädigung des Druckwerks verhindert.

Die Sperrhaken 146 liegen gemäß Fig. 8 mit ihren radial nach außen gerichteten Zähnen 148 in einer Umfangsnut, die im in Fig. 8 rechts liegenden Ende der Zylinderwand des Betätigungsknopfs 132 angebracht ist. Beim Aufschieben des Betätigungsknopfs 132 auf die Einstellwelle 140 werden die Sperrhaken 148 radial nach innen ausgelenkt, bis sie in den Bereich der Nut 150 kommen, worauf sie wieder die in Fig. 8 dargestellte Lage einnehmen. In dieser Lage verhindern die Zähne 148, daß der Betätigungsknopf 132 ohne weiteres wieder von der Einstellwelle 140 abgezogen werden kann. Die Sperrhaken 146 halten den Betätigungsknopf 132 daher auf der Einstellwelle 140 fest.

In beiden beschriebenen Ausführungsformen wird durch die beschriebenen konstruktiven Ausgestaltungen der Betätigungsknöpfe und der Endbereiche der Einstellwellen erreicht, daß der Betätigungsknopf jeweils sicher auf der zugehörigen Einstellwelle gehalten wird und erst bei Überschreiten eines bestimmten Grenzdrehmoments relativ zur Einstellwelle verdreht werden kann.

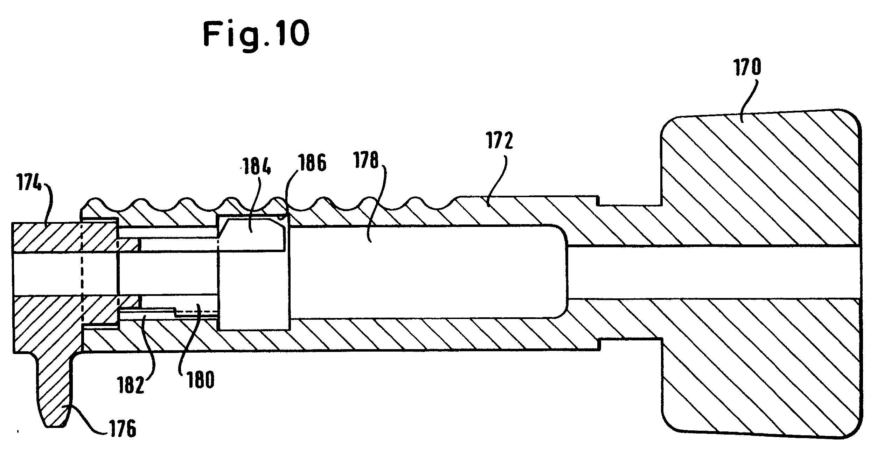

In der in Figur 10 dargestellten Ausführungsform ist die das auf die Typenträger übertragbare drehmomentbegrenzende Vorrichtung nicht zwischen dem Betätigungsknopf 170 und der Einstellwelle 172, sondern zwischen deren vom Betätigungsknopf 170 abgewandten Ende und einem zusätzlichen Bauteil angeordnet, nämlich einem Mitnehmerträger 174, der die Mitnehmer 176 trägt, die in die Nuten in den Innenumfangsflächen der Einstellräder 34 eingreifen.

Der Mitnehmerträger 174 ist in die Axialdurchführung 178 der Einstellwelle 172 einsteckbar und er ist mit federnden Rastfingern 180 versehen, die in Rastnuten 182 eingreifen, die in der Innenumfangsfläche der Axialdurchführung 178 der Einstellwelle 172 eingreifen.

Der Mitnehmerträger 174 weist ferner federnde Sperrhaken 184 auf, die in eine in der Innenumfangsfläche der Axialdurchführung 178 angebrachte Umfangsnut 186 eingreifen.

Durch die besondere Ausgestaltung des Mitnehmerträgers 174 wird somit erreicht, daß durch Einwirkung auf den Betätigungsknopf 170 nur ein bestimmtes Drehmoment auf die jeweils mit den Mitnehmern 176 in Eingriff stehenden Typenträger übertragen werden kann, so daß Beschädigungen des Druckwerks durch Aufwendung eines zu großen Drehmoments nach Inanlagekommen der den Verstellweg der Typenträger begrenzenden An-

schlagmittel verhindert werden.

## Ansprüche

1. Druckwerk mit mehreren Typenträgern (12; 34), die an ihrer Außenumfangsfläche in einem Bereich Drucktypen und in einem anderen Bereich Ablesetypen (44) tragen, wobei die Drucktypen durch Verdrehen der Typenträger (12; 34) in eine gewünschte Druckposition gebracht werden können, einer Einstellanordnung (32, 132, 170; 20, 140, 172; 24, 174, 176), die einen axial fest mit ihr verbundenen Betätigungsknopf (32) aufweist und durch axiales Verschieben mit jedem einzelnen der Typenträger (12; 34) zu dessen Verdrehen in eine Antriebsverbindung bringbar ist und Anschlagmitteln (100, 102, 104, 106, 110) zur Begrenzung des Verdrehwegs der Typenträger (12; 34), wobei die Einstellanordnung (20; 24) mit einer Vorrichtung zur Begrenzung des mittels des Betätigungsknopfs (32) übertragbaren Drehmoments versehen ist, dadurch gekennzeichnet, daß die Vorrichtung zur Begrenzung des Drehmoments federnde Rastelemente (96; 114; 180) aufweist, die den Betätigungsknopf (32; 132; 170) mit einem durch ihre Federhärte bestimmten Rastmoment, das größer als das zum Verdrehen der Typenträger (12; 34) erforderliche Drehmoment ist, gegen ein Verdrehen relativ zu dem mit der Einstellanordnung (32, 132, 170; 20, 140, 172; 24, 174, 176) in Antriebsverbindung stehenden Typenträger festhalten.

2. Druckwerk nach Anspruch 1, dadurch gekennzeichnet, daß die Rastelemente (96; 132) dem Betätigungsknopf (32; 132) und dem diesen tragenden Endbereich einer sich axial durch zentrale Öffnungen (35) der Typenträger (12) bzw. durch zentrale Öffnungen (35) von dem Verdrehen der Typenträger dienenden Einstellrädern (34) erstreckenden Einstellwelle (20; 140) zugeordnet sind.

3. Druckwerk nach Anspruch 2, dadurch gekennzeichnet, daß die Rastelemente am Betätigungsknopf angebrachte, sich axial erstreckende Rastfinger (96) sind, die mit Rastflächen (66) an der Einstellwelle (20) in Eingriff stehen.

4. Druckwerk nach Anspruch 3, dadurch gekennzeichnet, daß der Betätigungsknopf (32) aus einer Außenhülse (82) und einer damit an der Stirnwand (86) des Betätigungsknopfs (32) verbundenen Innenhülse (84) besteht, daß die Innenhülse (84) zur Bildung der Rastfinger (96) mit axialen Schlitzen (94) versehen ist, daß ein Abschnitt des den Betätigungsknopf (32) aufnehmenden Endbereichs (28) der Einstellwelle (20) im Querschnitt ein Polygon ist, dessen Seitenflächen Rastflächen (66) bilden, wobei die Anzahl der Rastflächen (66) gleich der Anzahl der Rastfinger (96) ist.

5. Druckwerk nach Anspruch 4, dadurch gekennzeichnet, daß der polygonale Abschnitt des den Betätigungsknopf (32) aufnehmenden Endbereichs (28) der Einstellwelle (20) im Querschnitt quadratisch ist.

6. Druckwerk nach einem der Ansprüche 3 bis 5, gekennzeichnet durch einen Verbindungssteg (98) zwischen dem freien Ende jedes Rastfingers (96) und einer etwa in der Mitte der Längserstreckung der Außenhülse (82) liegenden Stelle.

7. Druckwerk nach einem der Ansprüche 4 bis 6, dadurch gekennzeichnet, daß der Innenhohlraum (88) der Innenhülse (84) im Bereich der Stirnwand (86) des Betätigungsknopfs (32) eine Verengung (90) mit kreisförmigem Querschnitt aufweist, daß die Einstellwelle (20) unmittelbar am Ende einen Wulst (68) und dahinter eine Umfangsnut (70) aufweist, wobei der Durchmesser des Wulsts (68) größer als der Innendurchmesser des Innenhohlraums (88) im Bereich der Verengung (90) und der Durchmesser der Nut (70) gleich diesem Innendurchmesser ist, und daß die Einstellwelle (20) in dem den Betätigungsknopf (32) tragenden Endbereich (28) einen diametral verlaufenden Schlitz (72) aufweist.

8. Druckwerk nach Anspruch 2, dadurch gekennzeichnet, daß die Rastelemente an dem den Betätigungsknopf (132) tragenden Endbereich (128) der Einstellwelle (140) angebrachte, sich axial erstreckende Rastfinger (144) sind, die mit axialen Rastnuten (138) in der Innenfläche der die Einstellwelle (140) umgreifenden Wand (133) des Betätigungsknopfs (132) in Eingriff stehen.

9. Druckwerk nach Anspruch 8, dadurch gekennzeichnet, daß die Einstellwelle (140) zumindest in dem den Betätigungsknopf (132) aufnehmenden Endbereich (128) eine Axialdurchführung (143) aufweist und daß in der die Axialdurchführung (143) umgebenden Wand (141) der Einstellwelle (140) zur Bildung der Rastfinger (144) axial verlaufende Schlitze (142) angebracht sind.

**10.** Druckwerk nach Anspruch 8 oder 9, dadurch gekennzeichnet, daß zusätzlich zu den Rastfingern (144) an der Einstellwelle (140) federnde Sperrhaken (146) gebildet sind, die zum Verhindern einer Axialverschiebung des Betätigungsknopfs (132) in eine sich in Umfangsrichtung erstreckende Nut (150) in der Innenfläche der die Einstellwelle (140) umgreifenden Wand (133) des Betätigungsknopfs (132) eingreifen.

**11.** Druckwerk nach Anspruch 1, dadurch gekennzeichnet, daß der Betätigungsknopf (170) der Einstellanordnung an einem Ende einer sich axial durch zentrale Öffnungen (35) in den Typenträgern (12, 34) erstreckenden Einstellwelle (172) sitzt, an deren anderem Ende ein Mitnehmerträger (174) angebracht ist, und daß die Rastelemente (180) der Einstellwelle (172) und dem Mitnehmerträger (174) zugeordnet sind.

**12.** Druckwerk nach Anspruch 11, dadurch gekennzeichnet, daß die Rastelemente an dem Mitnehmerträger (174) angebrachte Rastfinger (180) sind, die sich axial in eine Längsdurchführung (178) der Einstellwelle (172) erstrecken und mit axialen Rastnuten (182) in der die Längsdurchführung (178) umgebenden Innenumfangsfläche der Einstellwelle (172) in Eingriff stehen.

**13.** Druckwerk nach Anspruch 12, dadurch gekennzeichnet, daß an dem Mitnehmerträger (174) zusätzlich zu den Rastfingern (180) federnde Sperrhaken (184) angebracht sind, die zum Verhindern einer Axialverschiebung des Mitnehmerträgers (174) bezüglich der Einstellwelle (172) in eine sich in Umfangsrichtung erstreckende Nut (186) in der Innenumfangsfläche der Längsdurchführung (178) der Einstellwelle (172) eingreifen.

## Claims

**1.** Printing mechanism comprising a plurality of type carriers (12; 34) which at their outer peripheral face carry in one region printing types and in another region indicator types (44), the printing types being adapted by turning the type carriers (12; 34) to be brought into a desired printing position, a setting means (32, 132, 170; 20, 140, 172; 24, 174, 176) including an actuating knob (32) axially fixedly connected thereto and which by axial displacement can be brought into a drive connection with each of the type carriers (12; 34) for rotation thereof and stop means (100, 102, 104, 106, 110) for limiting the turning travel of the type carriers (12; 34), the setting means (20; 24) being provided with a means for limiting torque transmitted by means of the actuating knob (32), characterized in that the torque limiting means includes resilient detent elements (96; 114; 180) which with a detent moment which is governed by their spring hardness and which is greater than the torque necessary for turning the type carriers (12; 34) hold the actuating knob (32; 132; 170) against rotation relative to the type carriers (12; 34) in drive connection with the setting means (32, 132, 170; 20, 140, 172; 24, 174, 176).

**2.** Printing mechanism according to claim 1, characterized in that the detent elements (96; 132) are associated with the actuating knob 32; 132) and the end region carrying the latter of a setting shaft (20; 140) extending axially through central openings (35) in the type carriers (12) or through central openings (35) of the setting shaft (20; 140) adapted for turning the type carriers.

**3.** Printing mechanism according to claim 2, characterized in that the detent elements are axially extending detent fingers (96) which are disposed on the actuating knob and which are in engagement with the detent faces (66) on the setting shaft (20).

**4.** Printing mechanism according to claim 3, characterized in that the actuating knob (32) consists of an outer sleeve (82) and an inner sleeve (84) connected thereto at the end wall (86) of the actuating knob (32), that the inner sleeve (84) is provided with axial slots (94) to form the detent fingers (96), that a portion of the end region (28) of the setting shaft (20) receiving the actuating knob (32) is in cross-section a polygon whose side faces form detent faces (66), the number of detent faces (66) being equal to the number of the detent fingers (96).

**5.** Printing mechanism according to claim 4, characterized in that the polygonal portion of the end region (28) of the setting shaft (20) receiving the actuating knob (32) is square in cross-section.

**6.** Printing mechanism according to any one of claims 3 to 5, characterized by a connecting web (98) between the free end of each detent finger (96) and a point lying substantially in the centre of the longitudinal extent of the outer sleeve (82).

7. Printing mechanism according to any one of claims 4 to 6, characterized in that the inner cavity (88) of the inner sleeve (84) comprises in the region of the end wall (86) of the actuating knob (32) a constriction (90) of circular crosssection, that the setting shaft (20) comprises directly at the end a bead (68) and therebehind a peripheral groove (70), the diameter of the bead (68) being greater than the inner diameter of the inner cavity (88) in the region of the constriction (90) and the diameter of the groove (70) being equal to said inner diameter, and that the setting shaft (20) comprises in the end region (28) carrying the actuating knob (32) a diametrically extending slot (72).

8. Printing mechanism according to claim 2, characterized in that the detent elements are axially extending detent fingers (144) which are disposed on the end region (128) of the setting shaft (140) carrying the actuating knob (132) and are in engagement with the axial detent grooves (138) in the inner face of the wall (133) of the actuating knob (132) surrounding the setting shaft (140).

9. Printing mechanism according to claim 8, characterized in that the setting shaft (140) comprises at least in the end region (128) receiving the actuating knob (132) an axial passage (143) and that in the wall (141) of the setting shaft (140) surrounding the axial passage (143) axially extending slots (142) are disposed for forming the detent fingers (144).

10. Printing mechanism according to claim 8 or 9, characterized in that in addition to the detent fingers (144) on the setting shaft (140) resilient locking hooks (146) are provided which to prevent an axial displacement of the actuating knob (132) engage into a circumferentially extending groove (150) in the inner face of the wall (133) of the actuating knob (132) surrounding the setting shaft (140).

11. Printing mechanism according to claim 1, characterized in that the actuating knob (170) of the setting means is mounted at one end of a setting shaft (172) which extends axially through central openings (35) in the type carriers (12, 34) and at the other end of which a driver support (174) is disposed, and that the detent elements (180) are associated with the setting shaft (172) and the driver support (174).

12. Printing mechanism according to claim 11, characterized in that the detent elements are detent fingers (180) which are disposed on the driver support (174) and which extend axially into a longitudinal passage (178) of the setting shaft (172) and are in engagement with axial detent grooves (182) in the inner peripheral face of the setting shaft (172) surrounding the longitudinal passage (178).

13. Printing mechanism according to claim 12, characterized in that on the driver support (174) in addition to the detent fingers (180) resilient locking hooks (184) are disposed which to prevent an axial displacement of the driver support (174) relatively to the setting shaft (172) engage into a circumferentially extending groove (186) in the inner peripheral face of the longitudinal passage (178) of the setting shaft (172).

## Revendications

1. Groupe d'impression comprenant plusieurs porte-caractères (12 ; 34) qui comportent sur une partie de leur surface circonférentielle extérieure des caractères d'impression et sur une autre partie, des caractères de lecture (44), les caractères d'impression pouvant être amenés à une position souhaitée d'impression par un mouvement de révolution des porte-caractères (12 ; 34), ledit groupe d'impression comprenant par ailleurs un mécanisme de positionnement (32, 132, 170 ; 20, 140, 172 ; 24, 174, 176) comportant un bouton de manipulation (32) qui lui est assujetti axialement et pouvant être amené par déplacement axial en liaison d'entraînement avec chaque porte-caractères individuel (12 ; 34) afin de lui imprimer un mouvement de révolution, ledit groupe comprenant également des organes de butée (100, 102, 104, 106, 110) destinés à limiter la course de révolution des porte-caractères (12 ; 34), le mécanisme de positionnement (20 ; 34) étant équipé d'un dispositif de limitation du couple de rotation transmissible par le bouton de manipulation (32), caractérisé en ce que le dispositif de limitation du couple de rotation comprend des éléments élastiques d'arrêt (96 ; 114 ; 180) qui retiennent le bouton de manipulation (32 ; 132 ; 170) de manière à l'empêcher de tourner par rapport au porte-caractères qui est en liaison d'entraînement avec le mécanisme de positionnement (32, 132, 170 ; 20, 140, 172 ; 24, 174, 176), la retenue exercée par lesdits éléments élastiques d'arrêt (96 ; 114 ; 180) étant produite par un moment d'arrêt qui est déterminé par la raideur de ces derniers et qui est supérieur au couple de rotation nécessaire à imposer un mouvement de révolution aux porte-caractères (12 ; 34).

2. Groupe d'impression selon la revendication 1, caractérisé en ce que les éléments d'arrêt (96 ; 132) sont combinés avec le bouton de manipulation (32 ; 132) et avec l'extrémité, qui supporte ce dernier, d'un arbre de positionnement (20 ; 140) qui passe axialement par l'ouverture centrale (35) des porte-caractères (12) et respectivement par l'ouverture centrale (35) de roues de positionnement (34) destinées à imposer un mouvement de révolution aux porte-caractères.

3. Groupe d'impression selon la revendication 2, caractérisé en ce que les éléments d'arrêt sont des épaulements d'arrêt (96) placés sur le bouton de manipulation, orientés axialement et mis en prise avec des surfaces d'arrêt (66) que comporte l'arbre de positionnement (20).

4. Groupe d'impression selon la revendication 3, caractérisé en ce que le bouton de manipulation (32) se compose d'une douille extérieure (82) et d'une douille intérieure (84) reliée à la précédente le long de la cloison frontale (86) du bouton de manipulation, en ce que la douille intérieure (84) comporte des fentes axiales (94) assurant la formation des épaulements d'arrêt (96), en ce qu'un tronçon de l'extrémité (28) de l'arbre de positionnement (20) qui supporte le bouton de manipulation (32) est en coupe transversale un polygone dont les surfaces latérales forment les surfaces d'arrêt (66), le nombre des surfaces d'arrêt (66) étant égal à celui des épaulements d'arrêt (96).

5. Groupe d'impression selon la revendication 4, caractérisé en ce que le tronçon polygonal de l'extrémité (28) de l'arbre de positionnement (20) supportant le bouton de manipulation (32) est carré en coupe transversale.

6. Groupe d'impression selon l'une des revendications 3 à 5, caractérisé par un ligament de liaison (98) entre l'extrémité libre de chaque épaulement d'arrêt (96) et un emplacement situé approximativement à mi-longueur de la douille extérieure (82).

7. Groupe d'impression selon l'une des revendications 4 à 6, caractérisé en ce que la cavité interne (88) de la douille interne (84) comporte un rétrécissement (90) de section circulaire au niveau de la cloison frontale (86) du bouton de manipulation (32), en ce que l'arbre de positionnement (20) comporte directement à l'extrémité un bourrelet (68) et, derrière ce dernier, une gorge circonférentielle (70), le diamètre du bourrelet (68) étant supérieur au diamètre intérieur de la cavité interne (88) au niveau du rétrécissement (90) et le diamètre de la gorge (70) étant égal à ce diamètre intérieur, et en ce que l'arbre de positionnement (20) comporte une fente (72) orientée diamétralement à l'extrémité (28) qui supporte le bouton de manipulation (32).

8. Groupe d'impression selon la revendication 2, caractérisé en ce que les éléments d'arrêt sont des épaulements d'arrêt (144) orientés axialement, placés à l'extrémité (128) de l'arbre de positionnement (140) qui supporte le bouton de manipulation (132) et mis en prise avec des rainures axiales d'arrêt (38) se trouvant dans la surface intérieure de la paroi (133) du bouton de manipulation (132) qui enserre l'arbre de positionnement (140).

9. Groupe d'impression selon la revendication 8, caractérisé en ce que l'arbre de positionnement (140) comporte au moins dans l'extrémité (128) qui supporte le bouton de manipulation (132) une traversée axiale (143) et en ce que des fentes (142) orientées axialement sont réalisées dans la paroi (141) de l'arbre de positionnement (140) qui enveloppe la traversée axiale (143) afin de former les épaulements d'arrêt (144).

10. Groupe d'impression selon la revendication 8 ou 9, caractérisé en ce que des crochets élastiques de blocage (146) formés en plus des épaulements d'arrêt (144) dans l'arbre de positionnement (140) pénètrent dans une gorge (150) orientée dans la direction de la circonférence et réalisée dans la surface intérieure de la paroi (133) du bouton de manipulation (132) qui enserre l'arbre de positionnement (140) afin d'interdire un déplacement axial du bouton de manipulation (132).

11. Groupe d'impression selon la revendication 1, caractérisé en ce que le bouton de manipulation (170) du mécanisme de positionnement est monté sur une extrémité d'un arbre de positionnement (172) qui passe axialement par une ouverture centrale (35) des porte-caractères (12, 34) et à l'autre extrémité duquel est monté un porte-tocs (174), et en ce que les éléments d'arrêt (180) sont combinés avec l'arbre de positionnement (172) et avec le porte-tocs (174).

12. Groupe d'impression selon la revendication 11, caractérisé en ce que les éléments d'arrêt sont des épaulements d'arrêt (180) placés sur le porte-tocs (174), pénétrant axialement dans une traversée longitudinale (178) de l'arbre de positionnement (172) et mis en prise avec des rainures axiales d'arrêt (182) réalisées dans la surface circonférentielle intérieure de l'arbre de positionnement (172) qui enveloppe la traversée longitudinale (178).

13. Groupe d'impression selon la revendication 12, caractérisé en ce que des crochets élastiques de blocage (184) sont placés en plus des épaulements d'arrêt (180) sur le porte-tocs (174) et pénètrent dans une gorge (186) orientée dans la direction de la circonférence et réalisée dans la surface circonférentielle intérieure de la traversée longitudinale (178) de l'arbre de positionnement (172) afin d'empêcher un déplacement axial du porte-tocs (174) par rapport à l'arbre de positionnement (172).

# Fig.1

EP 0 264 585 B1

# Fig. 2

# Fig.4

# Fig.3

66

66

66

66

66

28

72

68 70

66

66

IV

IV

20

24

24

78

EP 0 264 585 B1

# Fig. 5

Fig.7

Fig.6

Fig.8

Fig.9

Fig.10